# EUROPÄISCHE PATENTSCHRIFT

(11) **EP 2 760 623 B1**
(45) Veröffentlichungstag und Bekanntmachung des Hinweises auf die Patenterteilung: **03.02.2016**
(21) Anmeldenummer: 12770066.4
(22) Anmeldetag: 26.09.2012
(51) Int. Cl.: B23K 26/14, B23K 26/26, B23K 26/32, B23K 26/20

(54) **VERFAHREN ZUM VERBINDUNGSSCHWEISSEN VON BESCHICHTETEN BLECHEN UNTER VERWENDUNG EINES GAS-PULVERSTROMS**
METHOD OF JOINT-WELDING COATED SHEET METALS USING A GAS-POWDER FLOW
PROCÉDÉ D'ASSEMBLAGE PAR SOUDAGE DE TÔLES REVÊTUES AVEC UTILISATION D'UN FLUX DE POUDRE ET DE GAZ

(30) Priorität: 30.09.2011 DE 102011114555
(43) Veröffentlichungstag der Anmeldung: 06.08.2014
(73) Patentinhaber: WISCO Tailored Blanks GmbH, 47259 Duisburg (DE)
(72) Erfinder: BRANDT, Max, 47051 Duisburg (DE); BREUER, Arndt, 47249 Duisburg (DE); KOLLECK, Ralf, A-8044 Graz (AT); VOLLMER, Robert, A-8010 Graz (AT)
(74) Vertreter: Cohausz & Florack
(86) Internationale Anmeldenummer: PCT/EP2012/068969
(87) Internationale Veröffentlichungsnummer: WO 2013/045497

(56) Entgegenhaltungen:
- EP-A1- 0 780 190
- EP-A1- 2 022 987
- EP-A2- 0 444 550
- DE-U1-202007 018 832
- JP-A- 9 314 337
- JP-A- 9 314 373
- US-A- 4 299 860

## Beschreibung

Die Erfindung betrifft ein Verfahren zum Verbindungsschweißen von beschichteten Blechen im Stumpfstoß, siche z.B. DE 20 2007 018 832 U.

Das Warmumformen von Bauteilen aus Stahl hat sich in den letzten Jahren im Automobilbau etabliert. Dabei werden vielfach maßgeschneiderte Produkte (sogenannte "tailored products") hergestellt, die aus mehreren miteinander verschweißten Platinen unterschiedlicher Blechdicke und/oder Werkstoffgüte zusammengesetzt sind und bei relativ geringen Blechdicken und damit geringem Gewicht eine hohe Belastungsfähigkeit bieten. Die für das Warmumformen und Presshärten vorgesehenen Platinen sind in der Regel mit einer organischen oder anorganischen Schutzschicht und/oder Korrosionsschutzschicht beschichtet, um eine Verzunderung des Werkstücks im warmen Zustand vor der Warmumformung zu verhindern. Als Beschichtungswerkstoff wird dabei üblicherweise eine Aluminiumlegierung, vorzugsweise eine Aluminium-Silizium-Legierung verwendet. Beim Verschweißen solcher beschichteter Bleche tritt jedoch das Problem auf, dass Beschichtungsbestandteile, insbesondere Aluminium in die Schweißschmelze gelangt und sich in der Schweißnaht mit Eisen zu Fe-Al-Verbindungen ausbildet, die eine relativ geringe Festigkeit aufweisen und zur Schwächung des Bauteils in der Schweißnaht oder sogar zu einem Bauteilversagen führen können. Auch Zinkbeschichtungen kommen in Frage. Hier kann das Problem auftreten, dass sich beim Verschweißen Zink an den Korngrenzen ablagert, wodurch maximale Zug- und Druckspannungen in der Schweißnaht reduziert werden können.

Zur Lösung dieses Problems wurden bereits sogenannte Entschichtungsverfahren vorgeschlagen, mit denen die beispielsweise metallische Beschichtung an den Rändern der zu verschweißenden Blechkanten abgetragen wird (siehe z.B. DE 20 2007 018 832 U1). Diese Verfahren sind jedoch aufwendig und teuer.

Des Weiteren ist es im Stand der Technik bekannt, der Schweißschmelze einen Schweißzusatz zuzugeben, um die Festigkeit der Schweißnaht bzw. des hergestellten Bauteils zu verbessern. So ist beispielsweise aus der JP 07041841 A ein Laserschweißverfahren zum Fügen von im Stumpfstoß angeordneten Stahlblechen bekannt, bei dem der Schweißschmelze feines Kohlenstoffpulver zugeführt wird, um eine kohlenstoffangereichte Schweißschmelze und damit eine härtere Schweißnaht zu erzielen.

Der vorliegenden Erfindung liegt die Aufgabe zugrunde, ein Verfahren anzugeben, mit dem bzw. der beschichtete Bleche auf wirtschaftliche Weise miteinander verschweißt werden können, ohne dass es zu einem Festigkeitsverlust in der Schweißnaht durch Beimischung von Beschichtungshauptbestandteilen aus den Schutzschichträndern der aneinandergefügten Bleche kommt.

Diese Aufgabe wird hinsichtlich des Verfahrens durch das Verfahren mit den Merkmalen des Anspruchs 1 gelöst.

Bevorzugte und vorteilhafte Ausgestaltungen des erfindungsgemäßen Verfahrens sind in den Unteransprüchen 2 bis 9 angegeben.

Gemäß dem erfindungsgemäßen Verfahren wird der im Fügestoß der zu verschweißenden Bleche erzeugten Schweißschmelze mindestens ein pulverförmiger Schweißzusatz in Form eines Gas-Pulverstroms über mindestens einen Strömungskanal in der Weise zugeführt, dass der aus dem Strömungskanal austretende Gas-Pulverstrom auf die Schweißschmelze gerichtet ist und eine Austrittsgeschwindigkeit von mindestens 2 m/s aufweist, so dass sich eine turbulente Durchmischung des Schweißzusatzes mit der Schweißschmelze ergibt, bei der sich in der Schweißschmelze Strömungswirbel bilden.

Durch das Einbringen von pulverförmigem Schweißzusatz einer geeigneten Partikelgröße ist ein diffuses Aufmischen und Durchlegieren in der Schweißschmelze möglich. Da die Schweißzeit relativ kurz ist, was insbesondere für das Laserschweißen gilt, bei dem die Dauer der Schmelzphase typischerweise im Bereich von nur etwa 6 ms bis 125 ms liegt, lässt sich mit einem Schweißzusatz in Form eines Zusatzdrahtes keine ausreichende Durchmischung mit dem zu verschweißenden Werkstoff (Blech) erzielen. Durch die Verwendung eines pulverförmigen Schweißzusatzes, der relativ kleine Partikel, vorzugsweise kleine Metallpartikeln aufweist, kann eine weitgehend homogene Legierungsdurchmischung auch in sehr kurzen Zeiträumen der Schmelzphase erzielt werden, insbesondere beim Laserschweißen.

Um ein homogenes oder nahezu homogenes Schweißnahtgefüge ohne negative Beeinflussung durch vorzugsweise den Zink-Anteil, besonders bevorzugt den Aluminium-Anteil bzw. Aluminium-Silizium-Anteil aus der Beschichtung zu erzielen, sieht die Erfindung zudem eine turbulente Durchmischung des pulverförmigen Schweißzusatzes mit der Schweißschmelze vor, so dass sich in der Schweißschmelze Strömungswirbel bilden. Diese Strömungswirbel (Turbulenzen) werden vorwiegend durch die Kinetik des Gas-Pulverstroms, vorzugsweise Gas-Metallpulverstroms bewirkt. Die Austrittgeschwindigkeit des auf die Schweißschmelze gerichteten Gas-Pulverstroms beträgt erfindungsgemäß mindestens 2 m/s; sie liegt beispielsweise im Bereich von 2 m/s bis 50 m/s, insbesondere zwischen 2 m/s und 40 m/s, vorzugsweise zwischen 2 m/s und 30 m/s. Die erzeugten Strömungswirbel (Turbulenzen) in der Schweißschmelze tragen dazu bei, dass eine vollständige oder nahezu vollständige Durchmischung des Schweißzusatzes mit der Werkstofflegierung stattfinden kann.

Eine bevorzugte Ausgestaltung des erfindungsgemäßen Verfahrens ist dadurch gekennzeichnet, dass die Partikel des pulverförmigen Schweißzusatzes eine Partikelgröße im Bereich von 20 µm bis 160 µm, vorzugsweise im Bereich von 20 µm bis 120 µm aufweisen. Sind die Partikelgrößen des pulverförmigen Schweißzusatzes entsprechend fein, so wird hierdurch eine schnelle sowie weitgehend homogene Legierungsdurchmischung begünstigt.

Eine weitere vorteilhafte Ausgestaltung des erfindungsgemäßen Verfahrens sieht vor, dass der aus dem Strömungskanal austretende Gas-Pulverstrom schräg auf die Schweißschmelze gerichtet wird, so dass die Strahlachse des Gas-Pulverstromes mit einer durch die Bleche definierten, die Schweißschmelze umfassenden Werkstückebene einen Winkel im Bereich von 15 Grad bis 75 Grad, vorzugsweise im Bereich von 25 Grad bis 65 Grad einschließt. Eine solche schräge Anstellung des Gas-Pulverstromstrahls in Bezug auf die die Schweißschmelze umfassende Werkstückebene ist bei den typischen Vorschubgeschwindigkeiten des Schweißkopfes günstig für die Erzeugung der Strömungswirbel in der Schweißschmelze und damit günstig für eine möglichst schnelle sowie möglichst homogene Durchmischung des Schweißzusatzes mit dem schmelzflüssigen Werkstückmaterial.

Nach einer weiteren bevorzugten Ausgestaltung des erfindungsgemäßen Verfahrens wird als Gas zur Erzeugung des Gas-Pulverstroms Schutzgas verwendet. Das Schutzgas verhindert eine Oxidation der Schweißschmelze bzw. schützt die Schweißschmelze vor Oxidation, welche die Schweißnaht schwächen würde. Bei dem als Gas zur Erzeugung des Gas-Pulverstroms verwendeten Schutzgas kann es sich beispielsweise um CO₂, Argon, Stickstoff, Helium oder einem Mischgas aus Argon, Helium, Stickstoff und/oder CO₂ handeln.

Alternativ oder zusätzlich ist nach einer weiteren bevorzugten Ausgestaltung des erfindungsgemäßen Verfahrens vorgesehen, dass das Verbindungsschweißen der Bleche in einer Schutzgasatmosphäre durchgeführt wird.

Nachfolgend wird die Erfindung anhand einer ein Ausführungsbeispiel darstellenden Zeichnung näher erläutert. Es zeigen schematisch:
- Fig. 1: einen Laserstrahl-Schweißprozess zum Aneinanderfügen von mit einer Aluminiumlegierung beschichteten Blechen unter Zuführung von Schweißpulver mit großer Strömungsgeschwindigkeit, wobei die Schweißnaht im Längsschnitt dargestellt ist;
- Fig. 2: den Schweißprozess gemäß Fig. 1, wobei die miteinander im Stumpfstoß zu verschweißenden Bleche und die Schweißschmelze im Querschnitt dargestellt ist; und
- Fig. 3: einen Laserschweißkopf mit einem Strömungskanal zur Zuführung von pulverförmigem Schweißzusatz mit großer Strömungsgeschwindigkeit.

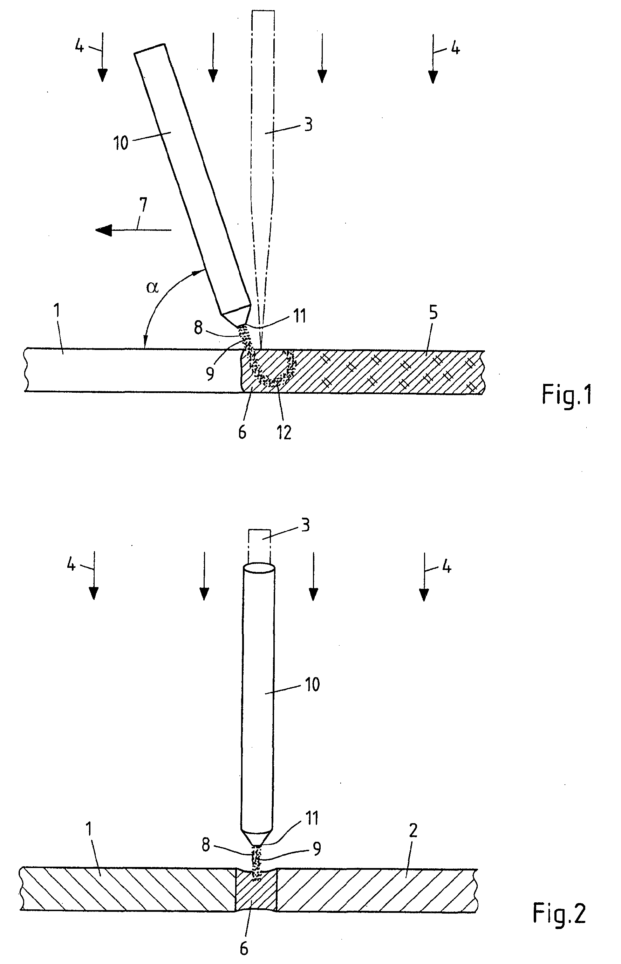

In den Figuren 1 und 2 ist das Prinzip des erfindungsgemäßen Verfahrens schematisch dargestellt. Mit den Bezugszeichen 1 und 2 sind miteinander im Stumpfstoß zu verschweißende Bleche bezeichnet. Mindestens eines der Bleche oder beide Bleche 1, 2 sind mit Aluminium, vorzugsweise einer Al-Si-Legierung beschichtet. Bei den Blechen 1, 2 handelt es sich um Platinen oder Bänder vorzugsweise aus Stahl, insbesondere Bor-Mangan-Stahl. Die Bleche 1, 2 können sich hinsichtlich ihrer Blechdicke und/oder Werkstoffgüte unterscheiden.

Die Bleche 1, 2 werden vorzugsweise mittels mindestens eines Laserstrahls 3 miteinander verschweißt. Alternativ können die Bleche 1, 2 aber erfindungsgemäß auch mittels einer anderen geeigneten Schweißvorrichtung miteinander verschweißt werden, beispielsweise mittels einer Plasmastrahlschweißvorrichtung oder einer Lichtbogenschweißvorrichtung.

Das Verbindungsschweißen der Bleche 1, 2 wird vorzugsweise in einer Schutzgasatmosphäre durchgeführt. Die Schutzgasatmosphäre ist in den Figuren 1 und 2 durch vier parallel zueinander angeordnete Pfeile 4 angedeutet.

Die miteinander zu verbindenden Bleche 1, 2 werden entlang ihres Fügestoßes aufgeschmolzen, so dass sich das aufgeschmolzene Material miteinander vermischen kann und sich nach dem Erstarren eine Schweißnaht 5 bildet. Die Schweißschmelze (schmelzflüssige Phase) der Bleche 1, 2 ist in den Figuren 1 und 2 durch eine feinere Schraffur und das Bezugszeichen 6 markiert. Die erstarrte Schweißschmelze, d.h. die Schweißnaht 5 ist in Fig. 1 durch zusätzliche Querstriche markiert.

Die Vorschubrichtung des Schweißkopfes einer Vorrichtung ist in Fig. 1 durch den Pfeil 7 angezeigt.

Erfindungsgemäß wird in die Schweißschmelze 6 mindestens ein pulverförmiger Schweißzusatz 8 eingebracht. Der Schweißzusatz 8 wird in Form eines Gas-Pulverstroms 9 über mindestens einen Strömungskanal (Düsenkanal) 10 der Schweißschmelze 6 zugeführt. Der Schweißzusatz 8 ist aus Schweißpulver bzw. Metallpulver gebildet. Das Metallpulver entspricht in seiner Zusammensetzung vorzugsweise im Wesentlichen der Werkstücklegierung mindestens einer der zu verschweißenden Bleche 1, 2. Alternativ oder zusätzlich kann der pulverförmige Schweißzusatz 8 auch festigkeitserhöhende Bestandteile enthalten oder ausschließlich aus solchen zusammengesetzt sein. Die Partikel des Schweißzusatzes 8 haben eine Größe im Bereich von 20 µm bis 160 µm, vorzugsweise im Bereich von 20 µm bis 120 µm.

Der während des Vorschubs des Schweißkopfes aus dem Strömungskanal 10 austretende Gas-Pulverstrom 9 ist auf die Schweißschmelze 6 gerichtet. Der an der Austrittsöffnung 11 endende Kanalabschnitt des Strömungskanals 10 ist dabei in Vorschubrichtung des Schweißkopfes voreilend gegenüber dem Schweißenergiestrahl bzw. Laserstrahl 3 angeordnet.

Die Austrittsgeschwindigkeit des Gas-Pulverstroms 9 beträgt mindestens 2 m/s, so dass sich eine turbulente Durchmischung der Schweißschmelze 6 mit dem Schweißzusatz 8 ergibt, bei der sich in der Schweißschmelze 6 Strömungswirbel 12 bilden (vgl. Fig. 1). Die Austrittsgeschwindigkeit des Gas-Pulverstroms 9 liegt vorzugsweise in einem Bereich von 2 m/s bis 30 m/s.

Bei dem Gas des Gas-Pulverstroms 9 handelt es sich vorzugsweise um Schutzgas, beispielsweise um Argon, CO₂, Stickstoff, Helium oder ein Mischgas aus Argon, Stickstoff, Helium und/oder CO₂.

Der auf das Werkstück, d.h. die Bleche 1, 2 auftreffende Schweißenergiestrahl bzw. Laserstrahl 3 wird in rechtwinkliger oder in nahezu rechtwinkliger Anstellung zum Werkstück 1, 2 ausgerichtet. Demgegenüber wird der aus dem Strömungskanal 10 austretende Gas-Pulverstrom 9 schräg auf die Schweißschmelze 6 gerichtet, so dass die Strahlachse des Gas-Pulverstroms 9 mit einer durch die Bleche 1, 2 definierten, die Schweißschmelze 6 umfassenden Werkstückebene einen Winkel α im Bereich von 15 Grad bis 75 Grad einschließt.

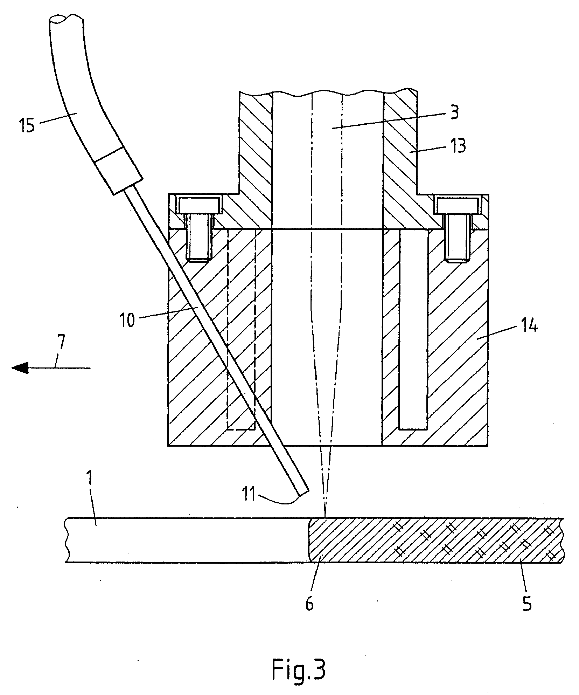

Die hohe Strömungsgeschwindigkeit des Gas-Pulvergemisches 9 wird durch eine spezielle Gestaltung des Strömungskanals 10 erreicht. Die hohe Strömungsgeschwindigkeit des Gas-Pulvergemisches 9 beinhaltet einen signifikanten Anteil an kinetischer Energie, welcher in Strömungswirbel 12 in der Schweißschmelze 6 umgewandelt wird. Diese Wirbel 12 ermöglichen ein homogenes oder nahezu homogenes Durchmischen des pulverförmigen Schweißzusatzes 8 mit der Werkstücklegierung und verhindern eine nadelförmige Ausbildung von Fe-Al Eutektika, welche nur relativ geringe Festigkeiten aufweisen. In Fig. 3 ist der untere Abschnitt eines Laserschweißkopfes 13 schematisch dargestellt. Der Laserschweißkopf 13 enthält eine (nicht gezeigte) Optik, mit der ein Laserstrahl 3 fokussiert und der Laserstrahlfokus auf den Fügestoß von miteinander zu verschweißenden Blechen gerichtet werden kann.

In dem in Fig. 3 skizzierten Beispiel ist an dem Schweißkopf 13 ein im Wesentlichen zylindrischer Hohlkörper 14 montiert, der mit einem röhrchenförmigen Strömungskanal (Düsenkanal) 10 versehen ist, über den dem Arbeitspunkt des Laserstrahls 3 und damit der Schweißschmelze 6 der oben erwähnte pulverförmige Schweißzusatz 8 mit großer Strömungsgeschwindigkeit zugeführt werden kann. Der Strömungskanal (Düsenkanal) 10 verläuft schräg zur Längsmittelachse des Hohlkörpers 14 bzw. zur Laserstrahlachse. Der Innendurchmesser des Düsenkanals 10 beträgt beispielsweise zwischen 0,6 mm bis 1,2 mm. An dem der Austrittsöffnung 11 gegenüberliegenden Ende des Strömungskanals 10 ist ein Förderschlauch 15 angeschlossen, über den pulverförmiger Schweißzusatz dem Düsenkanal 10 zugeführt wird.

Der Strömungskanal (Düsenkanal) 10 ist vorzugsweise konisch ausgebildet und verjüngt sich in Richtung seiner der Schweißschmelze 6 zugeordneten Austrittsöffnung 11. Alternativ oder ergänzend kann der Strömungskanal 10 in Richtung der Austrittsöffnung 11 auch eine oder mehrere Verengungen aufweisen. Die lichte Querschnittsform des Strömungskanals 10 kann dabei jeweils kreisrund ausgebildet sein oder eine von einer kreisrunden Querschnittsform abweichende Querschnittsform aufweisen.

Vielmehr sind eine Vielzahl von Varianten des erfindungsgemäßen Verfahrens denkbar, die auch bei einer von dem skizzierten Ausführungsbeispiel abweichenden Gestaltung von der in den Ansprüchen 1 bis 9 angegebenen Erfindung Gebrauch machen.

## Patentansprüche

1. Verfahren zum Verbindungsschweißen von beschichteten Blechen (1, 2) im Stumpfstoß, **dadurch gekennzeichnet, dass** der Schweißschmelze (6) mindestens ein pulverförmiger Schweißzusatz (8) in Form eines Gas-Pulverstroms (9) über mindestens einen Strömungskanal (10) in der Weise zugeführt wird, dass der aus dem Strömungskanal (10) austretende Gas-Pulverstrom (9) auf die Schweißschmelze (6) gerichtet ist und eine Austrittsgeschwindigkeit von mindestens 2 m/s aufweist, so dass sich eine turbulente Durchmischung des Schweißzusatzes (8) mit der Schweißschmelze (6) ergibt, bei der sich in der Schweißschmelze (6) Strömungswirbel (12) bilden.

2. Verfahren nach Anspruch 1, **dadurch gekennzeichnet, dass** die Bleche (1, 2) mittels mindestens eines Laserstrahls (3) miteinander verschweißt werden.

3. Verfahren nach Anspruch 1 oder 2, **dadurch gekennzeichnet, dass** der Schweißzusatz (8) aus einem Metallpulver gebildet ist.

4. Verfahren nach einem der Ansprüche 1 bis 3, **dadurch gekennzeichnet, dass** die Partikel des pulverförmigen Schweißzusatzes (8) eine Partikelgröße im Bereich von 20 µm bis 160 µm aufweisen.

5. Verfahren nach einem der Ansprüche 1 bis 4, **dadurch gekennzeichnet, dass** der Gas-Pulverstrom (9) so eingestellt wird, dass seine Austrittgeschwindigkeit aus dem Strömungskanal (10) im Bereich von 2 m/s bis 50 m/s liegt.

6. Verfahren nach einem der Ansprüche 1 bis 5, **dadurch gekennzeichnet, dass** der aus dem Strömungskanal (10) austretende Gas-Pulverstrom (9) schräg auf die Schweißschmelze (6) gerichtet wird, so dass die Strahlachse des Gas-Pulverstroms (9) mit einer durch die Bleche (1, 2) definierten, die Schweißschmelze (6) umfassenden Werkstückebene einen Winkel (α) im Bereich von 15 Grad bis 75 Grad einschließt.

7. Verfahren nach einem der Ansprüche 1 bis 6, **dadurch gekennzeichnet, dass** als Gas zur Erzeugung des Gas-Pulverstroms (9) Schutzgas verwendet wird.

8. Verfahren nach einem der Ansprüche 1 bis 7, **dadurch gekennzeichnet, dass** das Verbindungsschweißen der Bleche (1, 2) in einer Schutzgasatmosphäre durchgeführt wird.

9. Verfahren nach einem der Ansprüche 1 bis 8, **dadurch gekennzeichnet, dass** mindestens eines der miteinander zu verschweißenden Bleche (1, 2) ein Blech aus Stahl, vorzugsweise Bor-Mangan-Stahl ist, welches mit Aluminium, vorzugsweise einer AL-Si-Legierung beschichtet ist.

## Claims

1. Method for joint-welding coated metal sheets (1, 2) in a butt joint, **characterised in that** at least one pulverulent welding additive (8) in the form of a gas-powder flow (9) is added to the weld melt (6) via at least one flow duct (10), in such a way that the gas-powder flow (9) leaving the flow duct (10) is directed towards the weld melt (6) and has an output speed of at least 2 m/s, in such a way the welding additive (8) is mixed together turbulently with the weld melt (6), flow eddies (12) forming in the weld melt (6) during said mixing.

2. Method according to claim 1, **characterised in that** the metal sheets (1,2) are welded together by means of at least one laser beam (3).

3. Method according to either claim 1 or claim 2, **characterised in that** the welding additive (8) is formed from a metal powder.

4. Method according to any of claims 1 to 3, **characterised in that** the particles of the pulverulent welding additive (8) have a particle size in the range of 20 µm to 160 µm.

5. Method according to any of claims 1 to 4, **characterised in that** the gas-powder flow (9) is adjusted in such a way that the output speed thereof from the flow duct (10) is in the range of 2 m/s to 50 m/s.

6. Method according to any of claims 1 to 5, **characterised in that** the gas-powder flow (9) leaving the flow duct (10) is directed obliquely onto the weld melt (6), in such a way that the blast axis of the gas-powder flow (9) is at an angle (α) in the range of 15 degrees to 75 degrees to a workpiece plane defined by the metal sheets (1, 2) and comprising the weld melt (6).

7. Method according to any of claims 1 to 6, **characterised in that** protective gas is used as the gas for producing the gas-powder flow (9).

8. Method according to any of claims 1 to 7, **characterised in that** the joint-welding of the metal sheets (1, 2) is carried out in a protective gas atmosphere.

9. Method according to any of claims 1 to 8, **characterised in that** at least one of the metal sheets (1, 2) to be welded together is a sheet of steel, preferably boron-manganese steel, which is coated with aluminium, preferably an Al-Si alloy.

## Revendications

1. Procédé d'assemblage de tôles revêtues (1, 2) réalisé par soudage bord à bord, **caractérisé en ce qu'**au moins un additif de soudage pulvérulent (8) se présentant sous la forme d'un flux de poudre et de gaz (9) est fourni à la masse fondue de soudure (6) par au moins un canal d'écoulement (10), de manière telle que le flux de poudre et de gaz (9) sortant du canal d'écoulement (10) soit dirigé sur la masse fondue de soudure et présente une vitesse de sortie au moins de 2 m/s, de sorte qu'il se produit un mélange turbulent de l'additif de soudage (8) avec la masse fondue de soudure (6), mélange au cours duquel des tourbillons d'écoulement (12) se forment dans la masse fondue de soudure (6).

2. Procédé selon la revendication 1, **caractérisé en ce que** les tôles (1, 2) sont soudées l'une à l'autre au moyen d'au moins un faisceau laser (3).

3. Procédé selon la revendication 1 ou 2, **caractérisé en ce que** l'additif de soudage (8) est formé par une poudre métallique.

4. Procédé selon l'une quelconque des revendications 1 à 3, **caractérisé en ce que** les particules de l'additif de soudage pulvérulent (8) présentent une taille de particules se situant dans la plage allant de 20 µm à 160 µm.

5. Procédé selon l'une quelconque des revendications 1 à 4, **caractérisé en ce que** le flux de poudre et de gaz (9) est réglé de manière telle, que sa vitesse de sortie du canal d'écoulement (10) se situe dans la plage allant de 2 m/s à 50 m/s.

6. Procédé selon l'une quelconque des revendications 1 à 5, **caractérisé en ce que** le flux de poudre et de gaz (9) sortant du canal d'écoulement (10) est dirigé de façon oblique sur la masse fondue de soudure (6), de sorte que l'axe d'injection du flux de poudre et de gaz (9) forme, avec un plan de pièce d'usinage englobant la masse fondue de soudure (6) et défini par les tôles (1, 2), un angle (α) se situant dans la plage allant de 15 degrés à 75 degrés.

7. Procédé selon l'une quelconque des revendications 1 à 6, **caractérisé en ce que** l'on utilise, comme gaz servant à la production du flux de poudre et de gaz (9), un gaz inerte.

8. Procédé selon l'une quelconque des revendications 1 à 7, **caractérisé en ce que** l'assemblage par soudage des tôles (1, 2) est effectué dans une atmosphère de gaz inerte.

9. Procédé selon l'une quelconque des revendications 1 à 8, **caractérisé en ce qu'**au moins l'une des tôles (1, 2) à assembler l'une à l'autre par soudage est une tôle en acier, de préférence une tôle en acier contenant du bore et du manganèse, laquelle tôle est recouverte d'aluminium, de préférence recouverte d'un alliage d'aluminium (Al) et de silicium (Si).
